# EUROPÄISCHE PATENTANMELDUNG

(11) **EP 2 413 064 A2**
(43) Veröffentlichungstag der Anmeldung: **01.02.2012**
(21) Anmeldenummer: 11175987.4
(22) Anmeldetag: 29.07.2011
(51) Int. Cl.: F24J 2/52

(54) **Befestigungsvorrichtung für Anlagen auf Trapez- oder Wellblechdächern oder Trapez- oder Wellblechfassaden und Montageschraube hierfür**

(30) Priorität: 30.07.2010 DE 202010010858 U; 18.03.2011 DE 202011004146 U
(71) Anmelder: Etanco GmbH, 57234 Winsdorf-Wilden (DE)
(72) Erfinder: Violet, Jean-Cédric, 67500 Haguenau (FR)
(74) Vertreter: Solf, Alexander

(57) **Zusammenfassung**

Die Erfindung betrifft eine Befestigungsvorrichtung für Anlagen auf Trapez- oder Wellblechdächern oder Trapez- oder Wellblechfassaden, z.B. aus Stahl oder Aluminium, aufweisend eine Befestigungskalotte (1) und eine Montageschraube, wobei die Montageschraube ein Durchgriffsloch (4) in der Befestigungskalotte (1) durchgreift und eine Hochsicke des Trapez- oder Wellblechs des Dachs oder der Fassade durchgreifend in eine Dach- oder Fassadenunterkonstruktion schraubbar ist und die Raumform der Befestigungskalotte (1) der Raumform der Hochsicke des Trapez- oder Wellblechs für einen formschlüssigen Sitz auf einer Hochsicke angepasst ist, wobei die Montageschraube eine einstückige Stockschraube (9,30,33) oder eine zweiteilige Solarbefestigerschraube (17,36,39) ist.

## Beschreibung

Die Erfindung betrifft eine windlastsichere und hohe Lasten tragbare Befestigungsvorrichtung für Anlagen wie Photovoltaikanlagen, Solarkollektoren oder dergleichen Anlagen oder Schilder oder Tafeln auf Trapez- oder Wellblechdächern oder Trapez-oder Wellblechfassaden, z.B. Dächern oder Fassaden aus Aluminium oder Stahl.

Die Erfindung betrifft weiter eine Montageschraube, insbesondere verwendbar zur Bildung einer erfindungsgemäßen Befestigungsvorrichtung oder für Anlagen wie Schilder oder Tafeln oder andere zu befestigende Gegenstände auf Faserzementwellplattendächern oder Faserzementwellplattenfassaden, oder auf Dächern oder Fassaden mit Sandwichelementen, bestehend aus Stahlblechen mit Hartschaumkern, oder auf Aluminiumwellblechdächern oder Aluminiumwellblechfassaden oder dergleichen.

Bekannt ist, eine an die Raumform der Oberfläche der Hochsicke eines Trapezblechdaches angepasste trapezförmige Befestigungskalotte mit drei Montageschrauben zu kombinieren (DE 20 2006 014 469 U1). Bekannt ist auch eine an die Raumform der Oberfläche der Hochsicke eines Wellblechdachs angepasste zylinderschalenförmige Kalotte mit mindestens einer Montageschraube zu kombinieren.

Als Montageschraube dient z. B. eine Schraube mit Schraubenkopf und Gewindeschaft, wobei als zweites Teilstück auf deren Schraubenkopf auf der dem Gewindeschaft gegenüberliegenden Seite axial ein Gewindestift mit einem metrischen Gewinde befestigt, z. B. angeschweißt ist. Das metrische Gewinde wird mit Muttern bestückt und am Gewinde wird die jeweilige Anlage, z. B. die Photovoltaikanlage oder die Solaranlage befestigt.

Diese Art einer zweiteiligen Montageschraube wird auf dem Markt als "Solarbefestiger" angeboten und wird im Folgenden auch als Solarbefestigerschraube bezeichnet.

Der Schraubenschaft dieser Montageschraube trägt ein Gewinde, das entweder für das Einschrauben in Holz oder Stahl geeignet ist und das für die Befestigung der Montageschraube an einer Dachunterkonstruktion eingerichtet ist.

Die bekannte trapezförmige Kalotte, z. B. aus Stahl oder Leichtmetall, weist eine Trapezbasisplatte auf, an die seitlich abgewinkelt jeweils eine Trapezseitenschenkelplatte angebunden ist. In die Basisplatte ist zentral ein Durchgriffsloch eingebracht. Kalottenunterseitig kann eine elastische Dichtungsmittelbeschichtung, z. B. eine Moosgummibeschichtung aufgebracht sein.

Der Gewindeschaft der Montageschraube durchgreift das Durchgriffsloch, wobei der Schraubenkopf kalottenaußenseitig auf der Basisplatte der Kalotte aufsitzt und wobei zwischen dem Schraubenkopf und der Basisplatte eine Dichteinrichtung mit einer elastischen Dichtscheibe angeordnet ist.

Diese Art einer Befestigungsvorrichtung hat sich bewährt.

Bekannt ist außerdem gemäß DE 10 2006 020 630 A1 eine Bohrschraube, aufweisend einen Schraubenkopf, daran angrenzend einen glatten Schraubenschaft und angrenzend an den glatten Schraubenschaft einen Schraubengewindeschaft mit Grobgewinde, insbesondere für Holzunterkonstruktionen. Die Schraubenspitze kann eine reduzierte Bohrspitze oder eine Schneidkerbe aufweisen. Zudem sind, z.B. unter dem Namen Mage "Topex" oder Etasol "Drillnox", Bohrschrauben auf dem Markt bekannt, die einen Schraubenkopf, daran angrenzend einen glatten Schraubenschaft mit einem auf dem Schraubenschaft sitzenden Dichtring und an den Schraubenschaft angrenzend einen Gewindeschaft mit Holzschraubengewinde oder mit furchendem Stahlgewinde aufweisen, wobei der Gewindeschaft in eine selbstbohrende, im Falle eines Holzschraubengewindes zusätzlich reduzierte, Bohrspitze übergeht.

Aufgabe der Erfindung ist, die Belastbarkeit derartiger Befestigungsvorrichtungen zu erhöhen, so dass die Anzahl der Befestigungsvorrichtungen bei gleicher Gesamtbelastbarkeit der Dach- oder Fassadenkonstruktion verringert werden kann.

Diese Aufgabe wird durch die Merkmale des Anspruchs 1 gelöst. Vorteilhafte Weiterbildungen der Erfindung werden in den Unteransprüchen gekennzeichnet.

Die Erfindung sieht demgemäß die Verwendung einer im Wesentlichen bekannten Stockschraube oder einer an sich bekannten Solarbefestigerschraube vor, die mit einer zylinderbogenförmigen oder trapezförmigen Befestigungskalotte, insbesondere aus Leichtmetall z. B. aus einer Aluminiumlegierung kombiniert wird, die in den Seitenschenkeln jeweils mindestens ein für den Durchgriff einer Bohrschraube geeignetes Loch aufweist und die somit mit Bohrschrauben in die Seitenbereiche bzw. in die sog. Stege einer Trapezblechhochsicke oder einer Wellblechhochsicke befestigbar ist.

Anhand der Zeichnungen wird die Erfindung im Folgenden beispielhaft näher erläutert. Es zeigen:
- Fig. 1: eine perspektivische Ansicht einer erfindungsgemäßen trapezförmigen Befestigungskalotte;
- Fig. 2: eine perspektivische Ansicht der erfindungsgemäßen Befestigungskalotte nach Fig. 1 mit Bohrschrauben;
- Fig. 3: eine Seitenansicht einer Stockschraube für eine erfindungsgemäße Befestigungskalotte, insbesondere einer Kalotte nach Fig. 1 und 2;
- Fig.4: eine Seitenansicht einer Solarbefestigungsschraube für eine erfindungsgemäße Befestigungskalotte, insbesondere einer Kalotte nach Fig. 1 und 2;
- Fig. 5: eine perspektivische Ansicht einer erfindungsgemäßen, eine Stockschraube gemäß Fig. 3 aufweisenden Befestigungsvorrichtung;
- Fig. 6: eine perspektivische Ansicht einer erfindungsgemäßen, eine Solarbefestigerschraube gemäß Fig. 4 aufweisenden Befestigungsvorrichtung;
- Fig. 7: eine perspektivische Ansicht einer erfindungsgemäßen zylinderschalenförmigen Befestigungskalotte;
- Fig. 8: schematisch einen Querschnitt durch eine erfindungsgemäße Befestigungsvorrichtung befestigt auf einem Trapezdach;

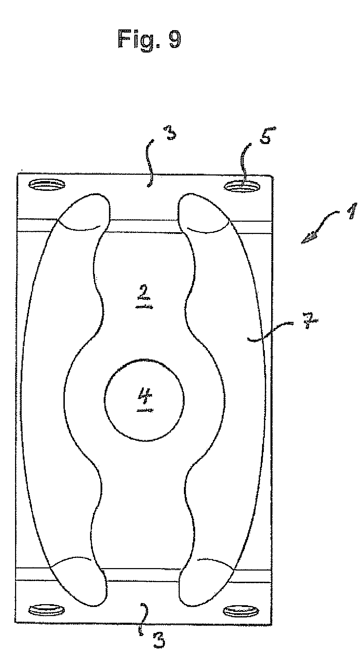

- Fig. 9: perspektivisch eine Draufsicht auf eine erfindungsgemäße trapezförmige Kalotte mit einer besonderen Raumform der Versteifungs- bzw. Verstärkungssicken;
- Fig. 10: eine Seitenansicht einer Stockschraube mit selbstbohrender Bohrspitze, insbesondere zur Bildung der erfindungsgemäßen Befestigungsvorrichtung;
- Fig. 11: eine Seitenansicht einer anderen Ausführungsform einer Stockschraube mit selbstbohrender Bohrspitze, insbesondere zur Bildung der erfindungsgemäßen Befestigungsvorrichtung;
- Fig. 12: eine Seitenansicht einer Solarbefestigungsschraube mit selbstbohrender Bohrspitze, insbesondere zur Bildung der erfindungsgemäßen Befestigungsvorrichtung;
- Fig. 13: eine Seitenansicht einer anderen Ausführungsform einer Solarbefestigungsschraube mit selbstbohrender Bohrspitze, insbesondere zur Bildung der erfindungsgemäßen Befestigungsvorrichtung.

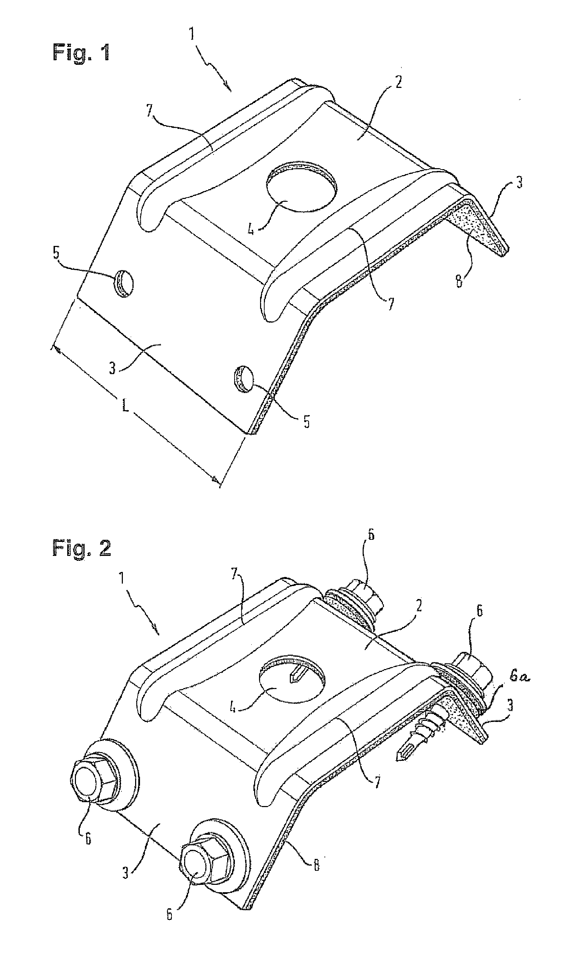

Eine erfindungsgemäße Trapezblechbefestigungskalotte 1 weist eine Trapezbasisplatte 2 sowie seitlich jeweils eine einstückig angebundene Trapezseitenschenkelplatte 3 auf (Fig. 1). In der Basisplatte 2 befindet sich zentral ein gestanztes, freies, randlich nicht ausgekleidetes Durchgriffsloch 4. In die Schenkelplatten 3 sind nebeneinander, z. B. parallel zur Längserstreckung "L" der Kalotte 1 nebeneinander, zwei Befestigungslöcher 5 eingebracht. Es liegt im Rahmen der Erfindung ein Loch oder mehr als zwei Löcher vorzusehen; letztere mit beliebig verteilter Anordnung.

Für den Durchgriff der Löcher 5 sind an sich bekannte Bohrschrauben 6 vorgesehen (Fig. 2), mit denen die Kalotte 1 auf die Seitenschenkel einer Hochsicke eines Trapezblechdachs oder eines Wellblechdachs oder einer Trapezblechfassade oder einer Wellblechfassade in an sich bekannter Weise anschraubbar ist (nicht dargestellt). Die Bohrschrauben 6 weisen zweckmäßigerweise jeweils eine Dichteinrichtung mit mindestens einem Dichtring 6a auf, der das entsprechende Befestigungsloch 5 im Zwischenraum zwischen Bohrschraubenkopf und Kalottenseitenschenkeloberfläche abdichten kann.

Zweckmäßigerweise verlaufen z. B. nach außen gewölbte Versteifungssicken 7 z. B. senkrecht zur Längserstreckung "L" der Kalotte 1 in der Bodenplatte 2 einer trapezförmigen Kalotte 1. Die Anzahl und Form der Sicken 7 ist nicht begrenzt. Vorzugsweise ist jeweils im Bereich der freien Außenrandkanten der Bodenplatte 2 eine Sicke 7 eingebracht (Fig. 1, Fig. 2). Sicken 7 können aber auch in den Schenkelplatten 3 vorgesehen sein.

Innenseitig bzw. unterseitig bzw. hochsickenseitig befindet sich auf der Kalotte 1 zweckmäßigerweise eine elastische Dichtmaterialschicht 8 vorzugsweise auf der gesamten Innenfläche der Kalotte 1.

Bekannt ist eine trapezförmige Kalotte mit einer Seitenschenkelplattenverschraubung mittels Bohrschrauben. Diese Kalotte soll auf eine trapezförmige Hochsicke eines Trapezblechs eines Trapezblechdachs geschraubt werden. Die Kalotte weist aber kein freies Durchgriffsloch für einen freien Durchgriff einer Befestigungsschraube auf, gleichwohl aber ein Loch, das mit einer nach oben abstehenden ein Innengewinde aufweisenden Gewindehülse ausgekleidet ist. In die Gewindehülse wird ein Gewindestift eingeschraubt, auf den Anlagen wie z. B. Photovoltaikanlagen angeschraubt werden können. Eine Verschraubung mit einer Dachunterkonstruktion wie mit der erfindungsgemäßen Befestigungsvorrichtung ist nicht vorgesehen; demgemäß ergibt sich auch kein Problem bezüglich einer Lochleibung, weil die Gewindehülse fest eingenietet ist.

Bei der erfindungsgemäßen Befestigungsvorrichtung aus der Kombination einer Befestigungsschraube in Form einer Stockschraube oder einer Solarbefestigerschraube mit einer erfindungsgemäßen Kalotte mit freiem Durchgriffsloch 4 tritt das Problem der Lochleibung bei quer zur Längsachse der Befestigungsschraube wirkenden, z. B. wechselnden Kräften, z. B. Windkräften, in jedem Fall auf. Diese Kräfte werden relativ elastisch von der erfindungsgemäßen Kalotte abgefangen, weil die Bohrschrauben auf den Trapezseitenschenkeln 3 angeordnet sind und dadurch das Kalottenmaterial in einem ausreichenden Umfang elastisch federn kann. Diese Wirkung der Kalotte war bisher nicht bekannt und trägt nicht unerheblich zur Dauerstandfestigkeit der Befestigungseinrichtung auf dem Dach oder an einer Fassade bei.

Zur Bildung einer Befestigungsvorrichtung wird das Durchgriffsloch 4 nach einer Ausführungsform der Erfindung von einer einstückigen Stockschraube 9 durchgriffen. (Einstückig meint, dass die Schraube aus einem einzigen Metallteil gefertigt ist). Diese Stockschraube 9 weist oberendig einen kantigen, insbesondere sechskantigen Schaftbereich 10, eine so genannte Aufnahme 10 auf, an den ein entsprechendes Werkzeug zum Drehen der Stockschraube 9 angesetzt werden kann.

Es schließt sich nach unten ein Gewindeschaft 11 mit einem metrischen Gewinde an, der in einen glatten Durchgriffsschaft 12 übergeht, an den sich ein Holzschraubengewindeschaft 13 anschließt.

Auf dem unteren Ende des metrischen Gewindes sitzt eine Mutter 14, insbesondere Sechskantmutter, vorzugsweise eine Sperrzahnmutter aufgeschraubt, die vom Durchgriffsschaft 12 abgestützt und gekontert wird und somit fest sitzend angeordnet werden kann.

Unterhalb der Mutter 14 befindet sich eine Dichtungseinrichtung, die einen zylindrischen Dichtring 15 aus einem elastischen Dichtmaterial aufweist, z. B. formschlüssig auf dem Durchgriffsschaft 12 der Stockschraube 9 sitzend. Der Dichtring 15 hat einen nach unten weisenden Dichtringfortsatz 16 geringeren Durchmessers, wobei der Durchmesser des Dichtringfortsatzes 16 dem Durchmesser des Durchgriffslochs 4 der Kalotte 1 entspricht, so dass der Dichtringfortsatz 16 das Durchgriffsloch 4 zumindest formschlüssig, vorzugsweise aber kraftschlüssig durchgreifen kann.

Mit auf dem metrischen Gewinde des Gewindeschafts 11 steckenden Muttern 23 wird eine auf einem Trapezblechdach oder Wellblechdach oder einer Trapezblechfassade oder einer Wellblechfassade zu befestigende Anlage, z. B. Solaranlage oder Photovoltaikanlage bzw. eine Beschilderung befestigt, wenn die erfindungsgemäße Befestigungsvorrichtung durch eine Hochsicke eines Blechdachs in die Dachunterkonstruktion geschraubt ist (nicht dargestellt).

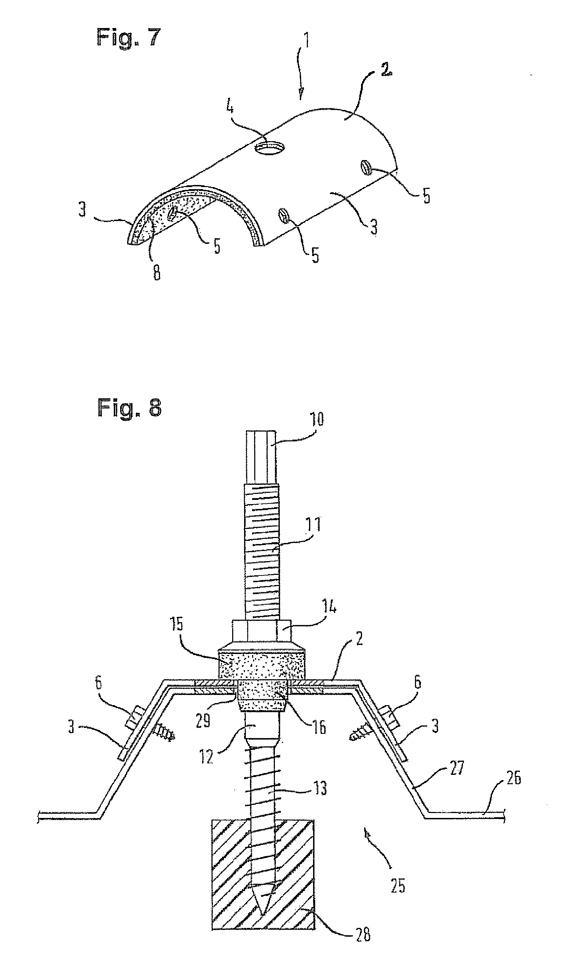

Fig. 8 zeigt schematisch wie die erfindungsgemäße Befestigungsvorrichtung auf einem Trapezblechdach 25 angeordnet ist, wobei das Trapezblechdach wie üblich ein Trapezblech 26 mit Hochsicken 27 sowie eine tragende Dachunterkonstruktion mit Holzbalken 28 aufweist und wobei das Holzschraubengewinde 13 in den Holzbalken 28 geschraubt ist und die Stockschraube 9 ein Loch 29 in der Hochsicke 27 durchgreift.

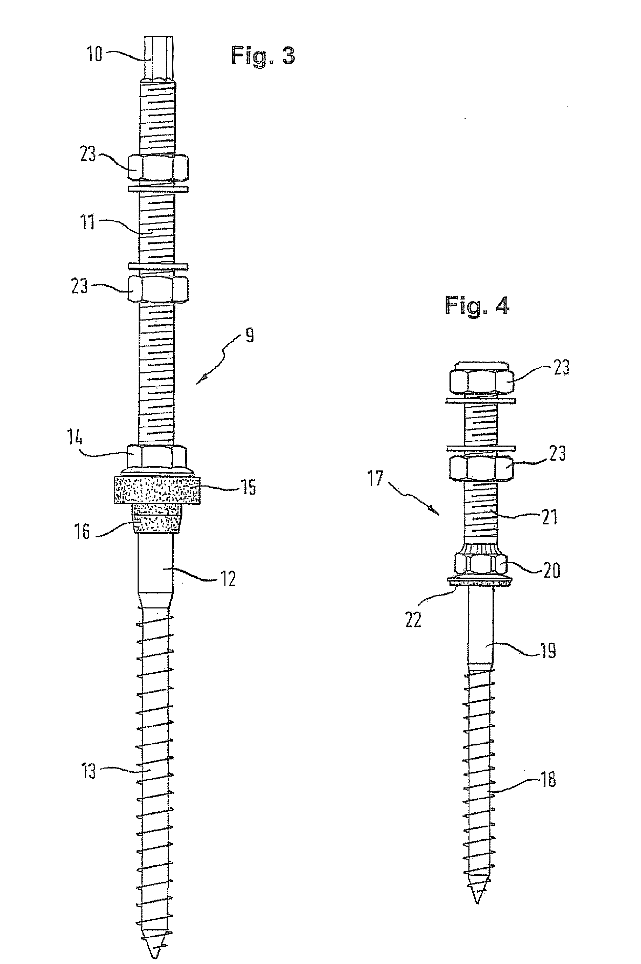

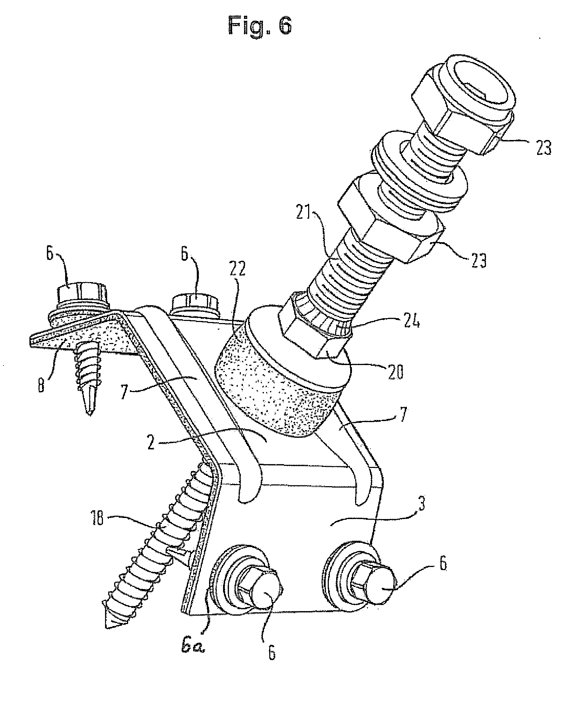

Anstelle der beschriebenen Stockschraube kann die erfindungsgemäße Kalotte 1 auch mit einer Solarbefestigungsschraube 17, z. B. gemäß Fig. 4 zu einer erfindungsgemäßen Befestigungsvorrichtung kombiniert werden. Diese Solarbefestigungsschraube 17 weist im unteren Endbereich einen Gewindeschaft 18 mit einem Holzschraubengewinde (Fig. 4) oder einem furchenden Stahlgewinde mit Zapfen (Fig. 6) auf, an den sich einstückig nach oben ein glatter Freischnittschaft 19 anschließt, auf dem einstückig ausgebildet ein mehrkantiger, z. B. sechskantiger Schraubenkopf 20 sitzt. Auf dem Schraubenkopf 20 ist mit einer Schweißnaht 24 ein ein metrisches Gewinde aufweisender Gewindeschaft 21 aufgeschweißt derart, dass die Achsen der Gewindestifte 18 und 21 fluchten. Unterhalb des Schraubenkopfes 20 sitzt auf dem Freischnittschaft 19 eine Dichtungseinrichtung mit einem Dichtring 22 aus elastischem Dichtmaterial.

Zur Bildung einer erfindungsgemäßen Befestigungsvorrichtung steckt die Solarbefestigungsschraube 17 im Durchgriffsloch 4 einer erfindungsgemäßen Kalotte 1, wobei der Schraubenkopf 20 bzw. die Dichteinrichtung mit der Dichtscheibe 22 außenseitig auf der Basisplatte 2 der Kalotte 1 aufsitzt.

Wie im vorangehenden Beispiel wird mit auf dem metrischen Gewinde des Gewindeschafts 21 steckenden Muttern 23 eine auf einem Trapezblechdach oder Wellblechdach oder an einer Trapezblechfassade oder einer Wellblechfassade zu befestigende Anlage, z. B. Solaranlage oder Photovoltaikanlage bzw. Beschilderung befestigt, wenn die erfindungsgemäße Befestigungsvorrichtung durch eine Hochsicke eines Trapezbleches oder Wellbleches in die Dachunterkonstruktion oder Fassadenunterkonstruktion geschraubt ist (nicht dargestellt).

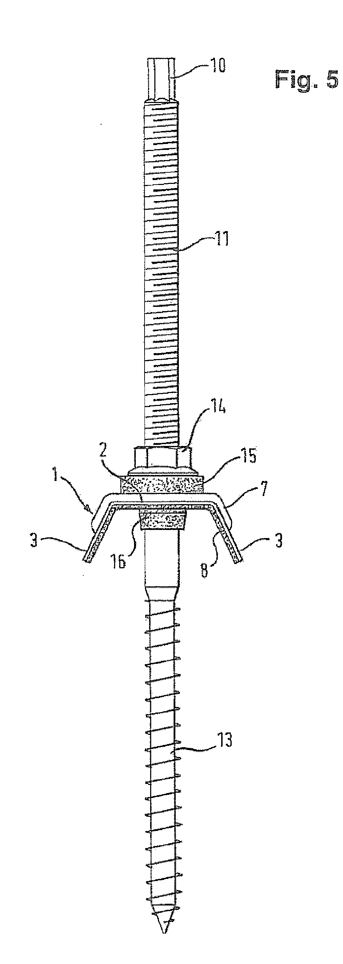

Aus Fig. 5 ist die Kombination der wesentlichen Elemente der eine Stockschraube aufweisenden erfindungsgemäßen Befestigungsvorrichtung zu erkennen.

Fig. 6 zeigt eine Kombination der wesentlichen Elemente der eine Solarbefestigungsschraube aufweisenden erfindungsgemäßen Befestigungsvorrichtung.

Die Vorteile der erfindungsgemäßen Befestigungsvorrichtung gegenüber bekannten gleichartigen Befestigungsvorrichtungen für Photovoltaikanlagen oder Solaranlagen sind überraschend zahlreich und insbesondere folgende:

Mit der Erfindung wird im Vergleich zum Stand der Technik erreicht, dass höhere Wind-, Scher- und Druckkräfte von Solar- und Photovoltaikdachanlagen oder Anlagen an Fassaden auf das Stahlblech übertragen werden können. Daraus resultiert außerdem, dass weniger Befestigungspunkte eingerichtet werden können und dass im Falle der Verwendung von Stockschrauben größere Gewindedurchmesser, z. B. M 10 oder M 12 verwendbar sind. Die aufzunehmenden Kräfte verteilen sich auch auf die seitliche Befestigung der Kalotte, so dass mehrere Angriffspunkte der zu übertragenden Kräfte geschaffen werden.

Ein weiterer Vorteil der erfindungsgemäßen Kalotte ist die Verwendung der Moosgummibeschichtung, die verhindert, dass Metall auf Metall sitzt, so dass chemische Reaktionen und elektrochemische Reaktionen vermieden werden können.

Als Bohrschrauben werden vorzugsweise Bohrschrauben mit einem Hinterschnitt verwendet. Der Hinterschnitt verhindert, dass die Schrauben beim Einschrauben in das Dünnblech der Trapez- oder Wellbleche mit z. B. einer Dicke von 0,63 mm überdreht werden.

Die erfindungsgemäßen Befestigungsvorrichtungen weisen jeweils eine Kalotte auf, deren Raumform der Raumform der Hochsicke eines Trapezbleches oder eines Wellbleches angepasst ist. Diese Bleche können auf einem Dach oder an einer Fassade befestigt angeordnet sein. Im Falle einer Fassade kann mit einer erfindungsgemäßen Befestigungsvorrichtung z. B. ein Schild oder eine Informationstafel oder dergleichen Flächenelement befestigt werden.

Die Erfindung ist beispielhaft mit Befestigungsvorrichtungen beschrieben, die eine trapezförmige Kalotte aufweisen. Für den Fall einer Befestigung an einem Wellblechdach oder einer Wellblechfassade hat die Kalotte die Raumform einer bogenförmigen Zylinderschale mit einem zentralen Durchgriffsloch 4 und Befestigungslöchern 5 für Bohrschrauben 6. Diese Version der Kalotte ist in Fig. 7 abgebildet.

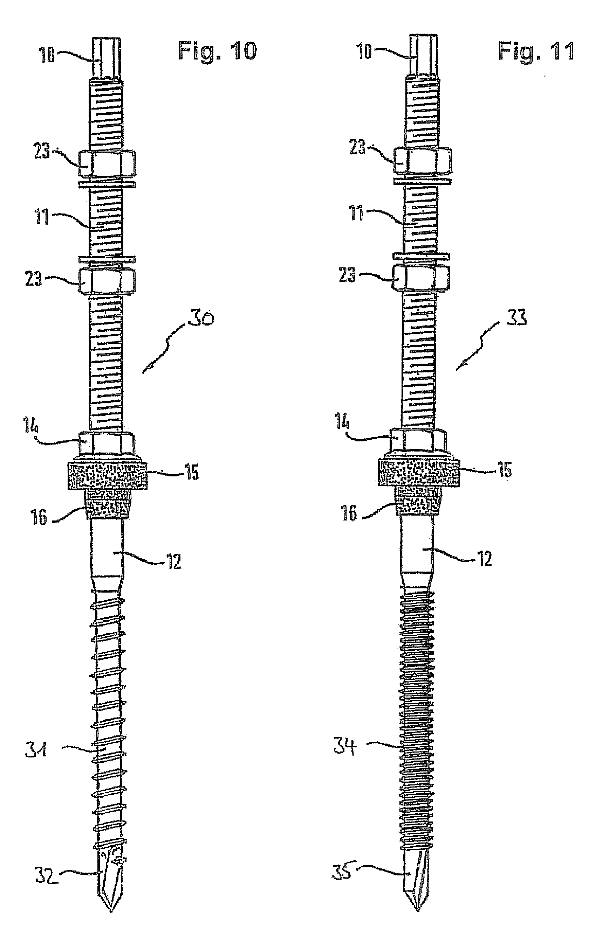

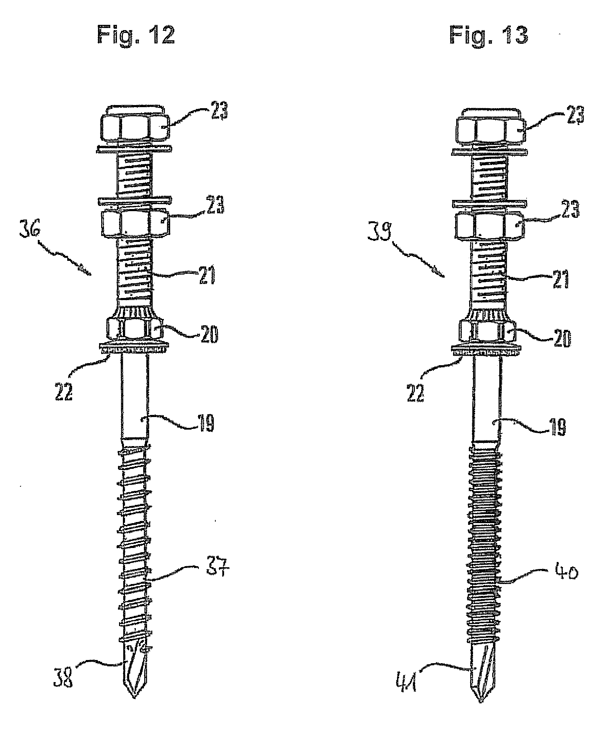

Eine besondere Ausführungsform der Erfindung betrifft eine Befestigungsschraube bzw. Montageschraube, die insbesondere zur Bildung einer erfindungsgemäßen Befestigungsvorrichtung geeignet ist, die jedoch auch separat, d.h. ohne zusätzliche Kalotte, zur Befestigung von Anlagen an Baukörpern, z. B. von Schildern oder Tafeln verwendbar ist. Die Montageschraube kann als eine Stockschraube 30, 33 (Fig. 10, 11) oder als eine Solarbefestigerschraube 36, 39 (Fig. 12, 13) ausgeführt sein und ist insbesondere für den Eingriff in Holz- oder Metallunterkonstruktionen ausgebildet.

Die Stockschraube 30, 33 ist einstückig ausgebildet und weist analog zu bereits beschriebener Stockschraube 9 oberendig einen kantigen, insbesondere sechskantigen Schaftbereich 10 bzw. eine Aufnahme 10 auf, an den sich nach unten ein Gewindeschaft 11 mit einem metrischen Gewinde anschließt, der in einen glatten Durchgangsschaft 12 übergeht. An den Durchgangsschaft 12 schließt sich bei der Stockschraube 30 gemäß Fig. 10 ein Gewindeschaft 31 mit einem Holzschraubengewinde an, welcher in eine selbstbohrende, vorzugsweise reduzierte Bohrspitze 32 übergeht oder es schließt sich an den Durchgangsschaft 12 gemäß Fig. 11, für eine Stockschraube 33, ein Gewindeschaft 34 für Metallunterkonstruktionen an, der in eine selbstbohrende Bohrspitze 35 übergeht. Die Stockschraube 30, 33 weist außerdem, wie für Stockschraube 9 beschrieben, auf dem unteren Ende des metrischen Gewindes sitzend eine festsitzende Mutter 14 sowie einen unterhalb der Mutter 14 befindlichen Dichtring 15 mit einem Dichtringfortsatz 16 sowie, zur Befestigung der genannten Anlagen und dergleichen, auf dem metrischen Gewinde des Gewindeschafts 11 steckende Muttern 23 auf.

Die Stockschraube 30, 33 kann zur Bildung einer erfindungsgemäßen Befestigungsvorrichtung, wie im Zusammenhang mit Stockschraube 9 detailliert beschrieben, das Durchgriffsloch 4 einer Kalotte 1 durchgreifen und durch eine Hochsicke eines Blechdachs in die Dachunterkonstruktion geschraubt werden. Alternativ ist die Stockschraube 30, 33 auf Grund der selbstbohrenden Bohrspitze 32, 35 auch ohne Kalotte verwendbar und kann direkt in Dächer oder Fassaden eingebracht werden, insbesondere in Faserzementwellplattendächer oder -Fassaden, Aluminium- oder Stahlwellblechdächer oder -Fassaden, Aluminiumtrapez- oder Stahltrapezdächer oder -Fassaden oder in Dächer oder Fassaden in Sandwichbauweise insbesondere bestehend aus PUR-Hartschaum welcher zwischen zwei Stahlblechen angeordnet ist. Bei dieser alternativen Verwendung sitzt der Dichtring 15 der Dichteinrichtung nach dem Einschrauben der Stockschraube 30, 33 außenseitig abdichtend direkt auf dem Dach- bzw. Fassadenmaterial auf.

Die andere Alternative der oben genannten besonderen Ausführungsform ist die Solarbefestigerschraube 36 gemäß Fig. 12, die im unteren Endbereich einen Gewindeschaft 37 mit einem Holzschraubengewinde aufweist, welcher nach unten in eine selbstbohrende, vorzugsweise reduzierte Bohrspitze 38 und nach oben in einen glatten Freischnittschaft 19 einstückig übergeht, oder die Solarbefestigerschraube 39 gemäß Fig. 13, die im unteren Endbereich einen Gewindeschaft 40 mit einem Schraubgewinde für Metall aufweist, welcher nach unten in eine selbstbohrende Bohrspitze 41 und nach oben ebenfalls in einen glatten Freischnittschaft 19 einstückig übergeht. Wie für die zuvor beschriebene Solarbefestigerschraube 17 sitzt auf dem Freischnittschaft 19 der Solarbefestigerschraube 36, 39 einstückig ausgebildet ein mehrkantiger Schraubenkopf 20, auf dem mit einer Schweißnaht 24 ein Gewindeschaft 21 mit einem Metrischen Gewinde derart aufgeschweißt ist, dass die Achsen der Gewindeschäfte 37 und 21 bzw. 40 und 21 fluchten. Weiterhin analog zur Solarbefestigerschraube 17 weist die Solarbefestigerschraube 36, 39 unterhalb des Schraubenkopfes 20, auf dem Freischnittschaft 19 sitzend, eine Dichtungseinrichtung mit einem Dichtring 22 aus elastischem Material sowie auf dem metrischen Gewinde des Gewindeschafts 21 befindliche Muttern 23, für die Befestigung von Anlagen, auf.

Die Solarbefestigerschraube 36, 39 kann zur Bildung einer erfindungsgemäßen Befestigungsvorrichtung, wie im Zusammenhang mit Solarbefestigerschraube 17 detailliert beschrieben, das Durchgriffsloch 4 einer Kalotte 1 durchgreifen und durch eine Hochsicke eines Blechdachs in die Dachunterkonstruktion geschraubt werden. Der Schraubenkopf 20 bzw. der Dichtring 22 sitzt dabei außenseitig auf der Basisplatte 2 der Kalotte 1 auf.

Alternativ ist die Solarbefestigerschraube 36, 39 wie im vorangegangenen Beispiel auf Grund der selbstbohrenden Bohrspitze 38, 41 ebenfalls ohne eine Kalotte verwendbar und kann für die Befestigung von Anlagen direkt in Wellblech- oder Trapezdächer oder -Fassaden eingebracht werden, insbesondere in Faserzementwellplattendächer oder -Fassaden, Aluminiumwellblechdächer oder -Fassaden oder in Dächer oder Fassaden in Sandwichbauweise insbesondere bestehend aus PUR-Hartschaum welcher zwischen zwei Stahlblechen angeordnet ist. Der Dichtring 22 der Dichteinrichtung sitzt nach dem Einschrauben der Solarbefestigerschraube 36, 39 außenseitig abdichtend direkt auf dem Dach- bzw. Fassadenmaterial auf.

Die reduzierte Bohrspitze 32, 38 ist entsprechend dem Stand der Technik in bekannter Art und Weise ausgeführt und weist demgemäß einen gegenüber dem Gewindeschaft 31, 37 in üblichem Maße leicht verringerten Durchmesser auf.

Die erfindungsgemäße Montageschraube ermöglicht die Befestigung von auf Dächern oder Fassaden zu befestigenden Anlagen, z.B. Solaranlagen oder Photovoltaikanlagen bzw. Beschilderungen, auf weiteren Dach- bzw. Fassadenmaterialien. Die Montageschrauben können dabei sowohl in Kombination mit einer Kalotte zu einer erfindungsgemäßen Befestigungsvorrichtung als auch ohne Kalotte verwendet werden. Bei dieser Ausbildung ist zudem vorteilhaft, dass auf Grund der selbstbohrenden Bohrspitze das Bohren und Gewindeformen in einem Zug erfolgt. Ein separates Vorbohren ist somit nicht erforderlich. Die Verwendung einer reduzierten Bohrspitze ermöglicht außerdem, insbesondere durch besseren Abtransport des Untergrundmaterials, ein einfaches und sicheres Eindrehen des Gewindeschafts der erfindungsgemäßen Montageschraube in die Holzunterkonstruktion ohne eine Beschädigung z.B. in Form von Lattenbruch oder Aufplatzen des Materials der Holzunterkonstruktion zu verursachen. Überdies verhindert die reduzierte Bohrspitze ein Zurückdrehen der Montageschraube im Untergrundmaterial.

## Patentansprüche

1. Befestigungsvorrichtung für Anlagen auf Trapez- oder Wellblechdächern oder Trapez- oder Wellblechfassaden, z.B. aus Stahl oder Aluminium, aufweisend eine Befestigungskalotte und eine Montageschraube, wobei die Montageschraube ein Durchgriffsloch in der Befestigungskalotte durchgreift und eine Hochsicke des Trapez- oder Wellblechs des Dachs oder der Fassade durchgreifend in eine Dach- oder Fassadenunterkonstruktion schraubbar ist und die Raumform der Befestigungskalotte der Raumform der Hochsicke des Trapez- oder Wellblechs für einen formschlüssigen Sitz auf einer Hochsicke angepasst ist,
**dadurch gekennzeichnet,dass**
die Montageschraube eine einstückige Stockschraube (9, 30, 33) oder eine zweiteilige Solarbefestigerschraube (17, 36, 39) ist.

2. Befestigungsvorrichtung nach Anspruch 1,
**dadurch gekennzeichnet, dass**
die Befestigungskalotte (1) aus Leichtmetall besteht und zweckmäßigerweise hochsickenseitig eine Dichtungsmaterialbeschichtung (8) aus einem elastischen Dichtwerkstoff z. B. aus Moosgummi aufweist.

3. Befestigungsvorrichtung nach Anspruch 1 und/oder 2,
**dadurch gekennzeichnet, dass**
die Raumform der Befestigungskalotte (1) ein Basiselement (2) und seitlich davon jeweils ein einstückig angebundenes Seitenschenkelelement (3) aufweist, wobei zentral in das Basiselement (2) ein Durchgriffsloch (4) und in die Seitenschenkelelemente (3) jeweils mindestens ein Befestigungsloch (5) eingebracht sind und die Befestigungskalotte (1) für den Durchgriff der Befestigungslöcher (5) mit mindestens zwei zugeordneten, eine Dichteinrichtung zur Abdichtung der Befestigungslöcher (5) von außen sowie vorzugsweise einen Hinterschnitt aufweisenden Bohrschrauben (6) kombiniert ist und wobei zweckmäßigerweise in die Befestigungskalotte (1), insbesondere in das Basiselement (2) mindestens eine Versteifungssicke (7) eingeformt ist.

4. Befestigungsvorrichtung nach einem oder mehreren der Ansprüche 1 bis 3,
**dadurch gekennzeichnet, dass**
die Stockschraube (9, 30, 33) oberendig eine kantige Aufnahme (10) zum Ansetzen eines Werkzeugs aufweist.

5. Befestigungsvorrichtung nach Anspruch 4,
**dadurch gekennzeichnet, dass**
sich an die kantige Aufnahme (10) ein Gewindeschaft (11) mit einem metrischen Gewinde anschließt, der in einen glatten Durchgriffsschaft (12) übergeht, an den sich ein Holzschraubengewindeschaft (13, 31) oder ein Gewindeschaft (34) mit einem furchenden Stahlgewinde anschließt, wobei eine Mutter (14), insbesondere eine Sperrzahnmutter auf das metrische Gewinde geschraubt ist, die vom Durchgriffsschaft (12) abgestützt und gekontert wird, wobei unterhalb der Mutter (14) eine Dichteinrichtung mit einem Dichtring (15) sitzt für eine oberseitige Abdichtung des Durchgriffslochs (4) der Befestigungskalotte (1).

6. Befestigungsvorrichtung nach Anspruch 5,
**dadurch gekennzeichnet, dass**
der Dichtring (15) einen Dichtringfortsatz (16) geringeren Durchmessers aufweist für einen form-, insbesondere aber kraftschlüssigen Durchgriff des Durchgriffslochs (4).

7. Befestigungsvorrichtung nach Anspruch 5 oder 6,
**dadurch gekennzeichnet, dass**
der Holzschraubengewindeschaft (31) in eine selbstbohrende, insbesondere reduzierte Bohrspitze (32) bzw. der Gewindeschaft (34) mit furchendem Stahlgewinde in eine selbstbohrende Bohrspitze (35) einstückig übergeht.

8. Befestigungsvorrichtung nach einem oder mehreren der Ansprüche 1 bis 3,
**dadurch gekennzeichnet, dass**
die Solarbefestigerschraube (17, 36, 39) im unteren Bereich einen Gewindeschaft (18, 37) mit einem Holzschraubengewinde oder einen Gewindeschaft (40) mit einem furchenden Stahlgewinde für die Verbindung mit einer Dach-oder Fassadenunterkonstruktion aufweist.

9. Befestigungsvorrichtung nach Anspruch 7,
**dadurch gekennzeichnet, dass**
sich an den Gewindeschaft (18, 37, 40) nach oben einstückig ein glatter Freischnittschaft (19) anschließt, auf dem einstückig ausgebildet ein mehrkantiger Schraubenkopf (20) sitzt, auf den mit einer Schweißnaht (24) ein ein metrisches Gewinde aufweisender Gewindeschaft (21) aufgeschweißt ist, wobei unterhalb des Schraubenkopfes (20) auf dem Freischnittschaft (19) eine Dichteinrichtung mit einem Dichtring (22) aus elastischem Dichtmaterial für eine oberseitige Abdichtung des Durchgriffslochs (4) der Befestigungskalotte (1) sitzt.

10. Befestigungsvorrichtung nach Anspruch 8 oder 9,
**dadurch gekennzeichnet, dass**
der Holzschraubengewindeschaft (37) in eine selbstbohrende, insbesondere reduzierte Bohrspitze (38) bzw. der Gewindeschaft (40) mit furchendem Stahlgewinde in eine selbstbohrende Bohrspitze (41) einstückig übergeht.

11. Befestigungsanordnung einer an einem Trapez - oder Wellblechdach oder einer Trapez- oder Wellblechfassade angeschraubten Anlage,
**dadurch gekennzeichnet, dass**
a) mehrere Befestigungsvorrichtungen nach einem oder mehreren der Ansprüche 1 bis 8 eine Hochsicke (27) eines Trapez- oder Wellblechs (26) des Dachs (25) oder der Fassade durchgreifend in die Dach- oder Fassadenunterkonstruktion (28) ein- bzw. angeschraubt sind, wobei jeweils die Befestigungskalotte (1) auf der Hochsicke (27) aufsitzt und mit den Bohrschrauben (6) angeschraubt ist und wobei die Mutter (14) im Falle der Verwendung einer Stockschraube (9, 30, 33) oder der Schraubenkopf (20) im Falle der Verwendung einer Solarbefestigungsschraube (17, 36, 39) sich oberhalb der Befestigungskalotte (1) befindet und die Dichtungseinrichtung unterhalb der Mutter (14) bzw. des Schraubenkopfes (20) das Durchgriffsloch (4) der Befestigungskalotte (1) gegen Wasserdurchtritt abdichtet und wobei die Dichteinrichtung der Bohrschrauben (6) mit ihrem Dichtring (6a) das jeweilige Befestigungsloch (5) der Befestigungskalotte (1) gegen Wasserdurchtritt abdichtet,
b) die Anlage mittels des metrischen Gewindes des Gewindeschafts (11) im Falle der Verwendung einer Stockschraube (9, 30, 33) oder des Gewindeschafts (21) im Falle der Verwendung einer Solarbefestigerschraube (17, 36, 39) und jeweils mittels Muttern (23) befestigt ist.
